# EUROPEAN PATENT SPECIFICATION

(11) **EP 1 467 239 B1**
(45) Date of publication and mention of the grant of the patent: **21.09.2011**
(21) Application number: 04008434.5
(22) Date of filing: 07.04.2004
(51) Int. Cl.: G02F 1/01, G02B 6/26, G02F 1/35

(54) **Optical power limiter**
Optischer Leistungsbegrenzer
Limiteur de puissance optique

(30) Priority: 09.04.2003 US 398859
(43) Date of publication of application: 13.10.2004
(73) Proprietor: KiloLambda Technologies Ltd., 61580 Tel-Aviv (IL)
(72) Inventor: Farber, Allan, Hashmonaim 73127 (IL); Nevo, Doron, Ra'anana 43563 (IL); Oron, Ram, Rehovot 76469 (IL); Donval, Ariela, Ramat Gan 52487 (IL); Oron, Moshe, Rehovot 76469 (IL)
(74) Representative: Grünecker, Kinkeldey, Stockmair & Schwanhäusser Anwaltssozietät

(56) References cited:
- EP-A- 0 325 431
- EP-A- 0 783 117
- EP-A- 1 122 564
- US-A- 5 113 476
- US-A1- 2002 024 752
- US-A1- 2002 076 148
- US-B1- 6 384 960
- SUN X ET AL: "Broadband optical limiting with multiwalled carbon nanotubes", APPLIED PHYSICS LETTERS, AIP, AMERICAN INSTITUTE OF PHYSICS, MELVILLE, NY, US, vol. 73, no. 25, 21 December 1998 (1998-12-21), pages 3632-3634, XP012021642, ISSN: 0003-6951, DOI: DOI:10.1063/1.122845

## Description

### FIELD OF THE INVENTION

The present invention relates to optical power-limiting device, and more particularly, to an optical power-limiting passive device and to a method for limiting optical power transmission.

### BACKGROUND OF THE INVENTION

Optical limiters are devices designed to have high transmittance for low level light inputs and low transmittance for high power. Since the development of the first lasers, passive optical limiters have been researched and concepts have been tested to protect optical sensors against laser peak-power induced damage. The first optical limiters for CW lasers were based on thermal lensing in absorbing bulk liquids, i.e., local heating in an imaging system reduced the index of refraction, causing "thermal blooming" and resulting in a beam that was no longer focused. Such a device is disclosed e.g. in US 2002 076 148. Other methods have been suggested for limiting pulsed laser sources such as reverse saturable absorption, two-photon and free carrier absorption, self-focusing, nonlinear refraction and induced scattering. The device itself must also possess a high threshold against damage, and not get into a state where it is "bleached-out" or transparent.

Communications and other systems in medical, industrial and remote sensing applications, may handle relatively optical high powers, from microwatts up to several watts, in single fibers or waveguides. With high intensities (power per unit area) introduced into these systems, many thin film coatings, optical adhesives, and even bulk materials, are exposed to light intensity beyond their damage thresholds. Another problem is laser safety, wherein there are well-defined upper power limits allowed to be emitted from fibers into the open air. These two issues call for a passive device that will limit the amount of energy propagating in a fiber/waveguide to the allowed level.

There have been many attempts to realize optical limiters, mainly for high power laser radiation, high power pulsed radiation, and eye safety devices. The techniques used in these devices were mainly:
1) Thermal change of the index of refraction *n*, in liquids having negative d*n*/dT, for defocusing the light beam, e.g., in an imaging system.
2) Self-focusing or self-defocusing, due to high electric field-induced index of refraction *n* change, through the third order susceptibility term of the optical material, here *n*=*nₒ*+*n₂E²* where *n₀* is the index of refraction at zero electric field (no light), *n₂* is the non-linear index change and *E* is the electric field strength of the light beam.
3) Colloidal Suspensions such as carbon black in both polar and non polar solvents which limit by induced scattering.

Both No. 1 and 2 of the above-mentioned techniques require very energetic laser beams or light intensities to produce a meaningful limitation. In the first technique, the volumes of liquid to be heated are large and need high powers. Another problem with this method is that the liquid is not a good optical medium and distorts the beam. In the second technique, the *n₂* coefficient is very small for usable materials and requires very high electric fields.

In the third method, the use of liquids is problematic for most applications. In a communications system, for instance, the use of liquids in a passive device causes noise and distortion from turbulence of the liquid in the optical path. Other problems reported using the colloidal liquid as an optical-limiting medium include aging either by disappearance of the active carbon material or the formation of flocs of loosely bound carbon particles that break up only after ultrasonic deflocculation. Some work has been done on using liquid crystals as limiting material, mainly for high power pulses but these materials cause noise and distortion worse than ordinary liquids due to director fluctuations.

US 6 384 960 discloses an optical limiter device including a liquid or solid medium containing nanotubes, for example, nanotubes made of carbon or boron, tungsten, silicon or composite nanostructures. The nanotubes attenuate the high-intensity incident radiation by nonlinear interaction therewith.

An optical limiter comprising carbon nano-particles in PMMA is disclosed in the paper "Broadband optical limiting with multiwalled carbon nanotubes "by X. Suu et al., Applied Physics Letters, AIP, vol. 73, no. 25, 21 December 1998, pages 3632-3634. The preamble of claim 1 is based on this publication.

### SUMMARY OF THE INVENTION

It is therefore a broad object of the present invention to provide an optical power-limiting device and a method for limiting power transmission, which ameliorates the disadvantages of the prior art devices and methods.

The present invention achieves its object by providing an optical power limiter comprising the features of claim 1, and an optical power-limiting method comprising the steps of claim 9.

In accordance with the present invention, there is therefore provided an optical power-limiting device, comprising an optical-limiting solid mixture in an optical system of limited numerical aperture, the optical-limiting solid mixture includes means affecting its optical properties upon being subjected to optical energy, which cause thermal or electric field induced changes in said optical-limiting solid mixture when passing through.

The invention further provides a method for limiting the power transmitted at a focal point of a lens or mirror in an optical system, inside a waveguide or in a gap between waveguides, where the optical-limiting solid mixture is placed. The optical-limiting solid mixture is composed of light absorbing particles, smaller than the wavelength of visible light (smaller than 0.5 microns) and preferably smaller than 0.1 microns (nano-powder) dispersed in a solid matrix material. The light absorbing particles include at least one metallic or non-metallic material selected from the group consisting of: Ag, Au, Ni, Va, Ti, Co, Cr, C, Re, Si, SmO₂ and mixtures of such materials. The solid matrix material may be a transparent or optical polymer or inorganic glass material, e.g., polymethylmethacrylate ("PMMA") and its derivatives, epoxy resins, glass, spin-on Glass ("SOG"), or other sol-gel materials. The optical-limiting function begins with light absorption in the dispersed powder particles, each according to its absorption spectrum. When the particles are heated by the absorbed light, they conduct heat to their surroundings, leaving hot spots in the volume surrounded by them, and a decreasing temperature gradient in their neighborhood. These hot volumes can decrease the light transmission through the optical-limiting solid mixture by several mechanisms, one of which is scattering due to the refractive index spatial fluctuations created by the hot particle and its surrounding medium of a given, positive or negative, index change with temperature (d*n*/dT). The scattered light, at angles larger than α (where numerical aperture is sin α) leaves the optical path of the optical system. Some increase in the back-reflected light also may be observed. The light that is not scattered continues along the optical path having lower, "limited" power. When the incident power is reduced, the scattering volume which surrounds each absorbing particle diminishes. The transmittance through the optical-limiting solid mixture returns to its original value, and the scattering process decreases to negligible values. The process may be repeated many times without any permanent damage up to energies that are an order of magnitude or more, larger than the transmitted power limit.

Other light-scattering mechanisms may also occur simultaneously or may dominate with different choices of matrix materials or absorbing particles. These mechanisms include stimulated Raman scattering, in which light is scattered inelastically by thermally induced molecular vibrations, or stimulated Brillouin scattering, in which light is scattered inelastically by local thermally induced acoustic waves.

The light-absorbing particles are dispersed in a transparent matrix such as a monomer which is subsequently polymerized. There are many techniques for preparing such dispersions, such as with the use of dispersion and deflocculation agents added to the monomer mix. One skilled in the art of polymer and colloid science is able to prepare this material for a wide choice of particles and monomers. Similarly, techniques are well known in the art to prepare composite materials with dispersed sub-micron particles in inorganic glass matrices.

The optical power-limiting device can offer the following advantages and properties:
1. The operation of the limiter is passive; no external power is required.
2. The device operates for many cycles (e.g., thousands), limiting at high input powers and returning to its original, non-limiting state when the input power is lowered or shut off.
3. The device may be activated by a wide range of wavelengths, e.g., visible, 800, 980,1065 1310, 1550 nm. It may have small differences in materials and dimensions to fit the desired spectral range.
4. The device withstands high intensities a few (e.g., x10) times higher than the limiting threshold.
5. The device has relatively fast (e.g., in the microseconds region and below) response, limited by the indirect heating time of minute volumes.
6. The device has high spectral transmission (e.g., 1-2 dB insertion loss) at intensities well below the power limit.
7. The device is suitable for use as an in-line fiber insert (like a patch cord), for single or multi-mode fibers, or for fiber lasers.

Some uses of the limiter may be in the optical communication area, e.g., detector protection, switch and line protection, amplifier input signal limiting and equalizing and power surge protection. Also, power regulation in networks, in the input or at the output from components. In the areas of medical, military and laser machining, an optical power limiter may be used for surge protection and safety applications. If used as a protective device in an imaging system, the limiter will work at the image point where there appears a bright light or a laser source and limit the amount of incoming light from this source without interfering with the rest of the image.

### BRIEF DESCRIPTION OF THE DRAWINGS

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1a is a cross-sectional view of two waveguide sections and an optical-limiting solid mixture constituting an optical power-limiting device according to the present invention.
Fig. 1b is an end elevation of the structure of Fig. 1a.
Fig. 2 is a cross-sectional view of a connector-encapsulated optical power-limiting device, using a limiter perpendicular to the beam propagation direction, according to the present invention.
Fig. 3 is a cross-sectional view of a connector-encapsulated optical power-limiting device, using a limiter at an angle to the beam propagation direction, according to the present invention.
Fig. 4 is a cross-sectional view of a bare-fiber, V-groove encapsulated optical power-limiting device, according to the present invention.
Fig. 4b is an end elevation of the structure of Fig. 4a.
Fig. 5 is a cross-sectional view of a bare-fiber, V-groove encapsulated optical, angled, power-limiting device, according to the present invention.
Fig. 5b is an end elevation of the structure of Fig. 5a.
Fig. 6 is a cross-sectional view of a bare-fiber, ferrule or guiding tube-encapsulated optical power-limiting device, according to the present invention.
Fig. 6b is an end elevation of the structure of Fig. 6a.
Fig. 7 is a cross-sectional view of a bare-fiber, ferrule or guiding tube-encapsulated optical, angled, power-limiting device, according to the present invention.
Fig. 7b is an end elevation of the structure of Fig. 7a.
Fig. 8 is an input-output curve of the optical power-limiting device shown in Fig. 2.
Fig. 9 is a time response curve of the optical power-limiting device of Fig. 8.
Fig. 10 is a cross-sectional view of an optical-limiting solid mixture placed at the focus of a lens of an optical system with a light-collecting lens of given numerical aperture, not according to the present invention.
Fig. 11 is a cross-sectional view of an optical-limiting solid mixture placed at the focus of a lens of an optical system with a light-collecting lens of given numerical aperture, with the optical-limiting solid mixture oriented at an angle to eliminate back reflection, not according to the present invention.
Fig. 12a is a cross-sectional view, of an optical-limiting system in which protection is provided from all angles.
Fig. 12b is an end elevation of the structure of Fig. 12a.
Fig. 13 is a cross-sectional view of an optical-limiting solid mixture placed in the core of a waveguide or optical fiber.
Fig. 13b is an end elevation of the structure of Fig. 13a.
Fig. 14 is a cross-sectional view of an optical-limiting solid mixture placed in the core of a waveguide or optical fiber in which the interface to the optical-limiting solid mixture is at an angle to eliminate back reflection.
Fig. 14b is an end elevation of the structure of Fig. 14a.

### DETAILED DESCRIPTION OF PREFERRED EMBODIMENTS

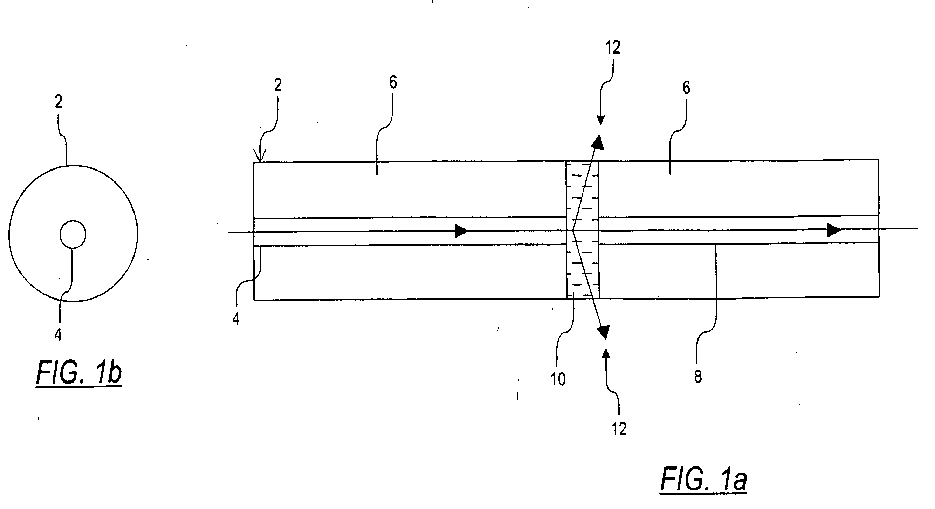

In the limiter configuration and operation illustrated in Figs. 1a and 1b, light enters a fiber or waveguide 2 having a core 4 and a cladding 6 (e.g., SMF 28 by Coming, USA), and impinges on an optical-limiting solid mixture 10 placed at the exit of the core 4. The optical-limiting solid mixture 10 is composed of a suspension of light absorbing particles, smaller than the wavelength of visible light (smaller than 0.5 microns) and preferably smaller than 0.1 microns (nano-powder) equally distributed or suspended in a solid, e.g., polymer, material having a large negative index change with temperature (d*n*/dT). The absorbing material include at least one metallic or non-metallic material selected from the group consisting of : Ag, Au, Ni, V, Ti, Co, Cr, C, Re, Si and mixtures of such materials. The polymer host material, having a large (d*n*/dT), may be: PMMA or its derivatives, polymer based on epoxy resins, glass, spin-on glass (SOG) or other sol-gel materials. The optical-limiting function begins with light absorption in the suspended small particles, according to their absorption spectra. When the particles are heated they conduct heat to their surroundings, leaving hot spots in the volume surrounded by a decreasing temperature gradient in their neighborhood. These hot volumes can decrease the light transmission through the optical-limiting solid mixture 10 by several mechanisms, one of which is scattering due to the refractive index spatial fluctuations created by the hot particle and its surrounding medium. Other, less dominant mechanisms were discussed earlier. The scattered light 12 at angles greater than the numerical aperture of fiber 6 will not propagate through the fiber core 8 and will eventually enter the cladding 6 and is absorbed externally. Some increase in the back-reflected light is seen at that time showing increased scattering in all directions.

The light that is not scattered continues along the optical path and has lower, "limited" power. When the incident power is reduced, the scattering volume, which surrounds each absorbing particle, diminishes. The transmission through the optical-limiting solid mixture 10 returns to its original value, as the scattering process decreases to negligible values. The process may be repeated many times without any permanent damage up to energies that are an order of magnitude or more, larger than the transmitted power limit. When the power is more than an order of magnitude larger than the threshold, the limiter turns permanently opaque thus protecting the components following it from permanent damage.

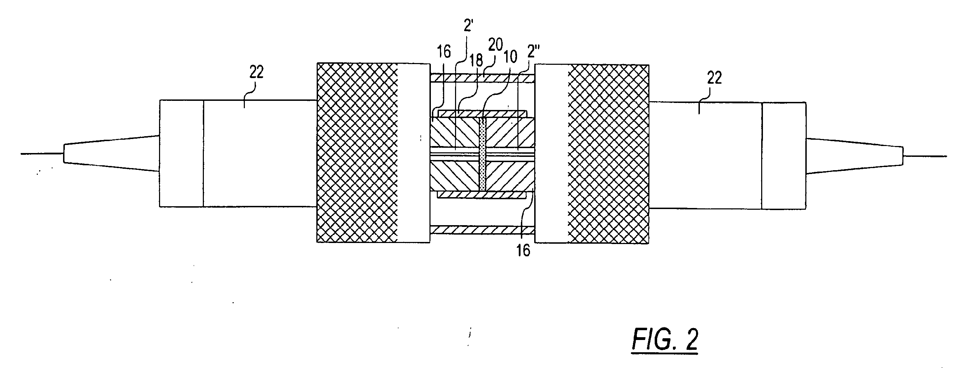

Fig. 2 illustrates a connector-encapsulated optical power-limiting device, using a limiter perpendicular to the beam propagation direction. The device is symmetrically packed in two PC (Physical Contact) connectors 22 having ferrules 16 in which an input fiber 2' and an output fiber 2" are affixed. The optical-limiting solid mixture 10 is placed in a gap of a few to a few tens of microns separating the two ferrules 16. The sleeve 18 is responsible for the alignment of the two fibers 2' and 2", and a housing 20 provides environmental protection and stability. The thickness of the optical-limiting solid mixture 10 as well as its composition is responsible for the limiting.

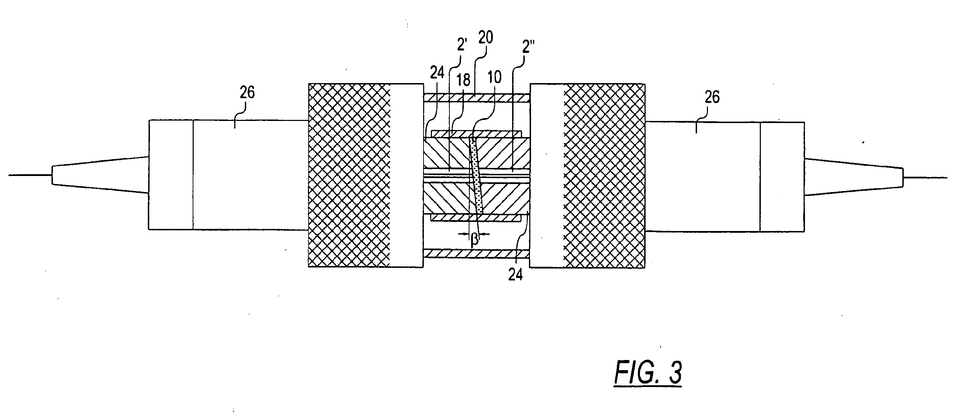

Fig. 3 illustrates a modification of the embodiment of Fig. 2 where the limiter 10 is tilted using APC (Angled Physical Contact) connectors 26 at an angle (e.g., 8°) relative to a plane perpendicular to the beam propagation direction, thus avoiding direct reflections into the core of the input fiber 2'. In this case the surfaces of the ferrules 24 are tilted at an angle β.

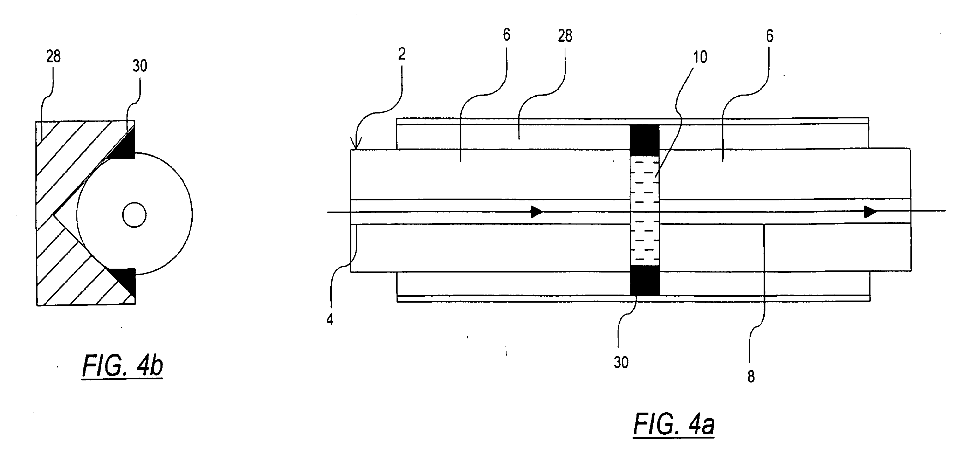

Figs. 4a and 4b illustrate a cross-sectional view of a bare-fiber, V-groove encapsulated optical power-limiting device. Here the input fiber 2 and the output fiber are affixed in a V-grooved optical bench 28 having two optional spacers 30 to define the inter-fiber distance. The optical-limiting solid mixture 10 is placed in the gap created by the spacers. Alternatively, the space between the fibers may be aligned with the use of a microscope without the use of spacers.

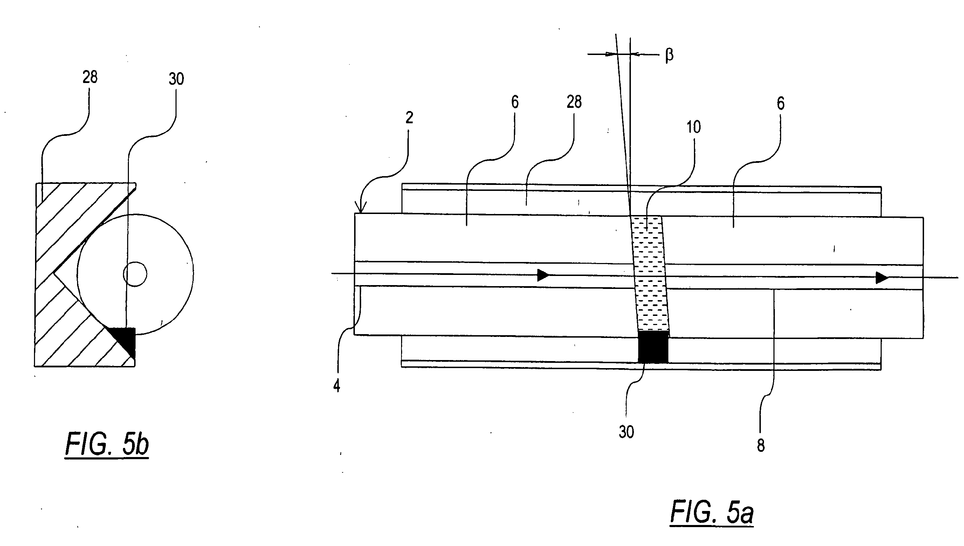

Figs. 5a and 5b illustrate a cross-sectional view of the bare-fiber, V-groove-encapsulated, angled, optical power-limiting device. Here the input fiber 2 and the output fiber are affixed in a V-grooved optical bench 28 having a spacer 30 to define the inter fiber distance. The optical-limiting solid mixture 10 is placed in the gap created by the spacer; this space is at an angle β, eliminating back reflections into the core.

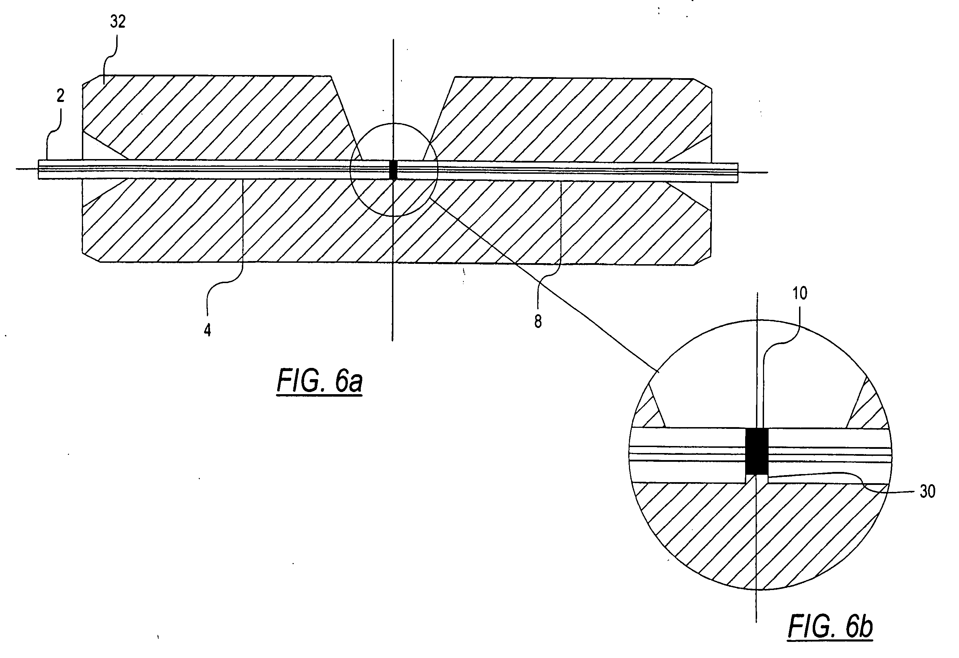

Figs. 6a and 6b illustrate a cross-sectional view of bare-fiber ferrule or guiding tube-encapsulated optical, power-limiting device. Here the input fiber 2 and the output fiber are affixed in a ferrule or guiding tube 32 having a spacer 30 to define the inter-fiber distance. The optical-limiting solid mixture 10 is placed in the gap created by the spacer through the side hole.

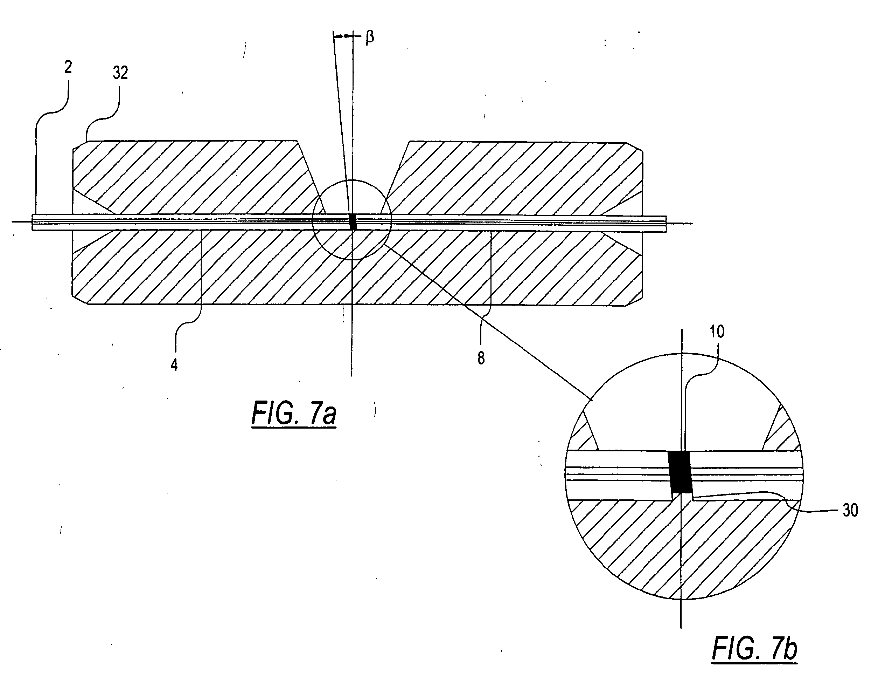

Figs. 7a and 7b illustrate a cross-sectional view of the bare-fiber, ferrule or guiding-tube-encapsulated I, angled, optical power-limiting device. Here the input fiber 2 and the output fiber are affixed in a ferrule or guiding tube 32 having a spacer to define the inter-fiber distance. The optical-limiting solid mixture 10 is placed in the gap created by the spacer; this space is at an angle β that eliminates back reflections into the core.

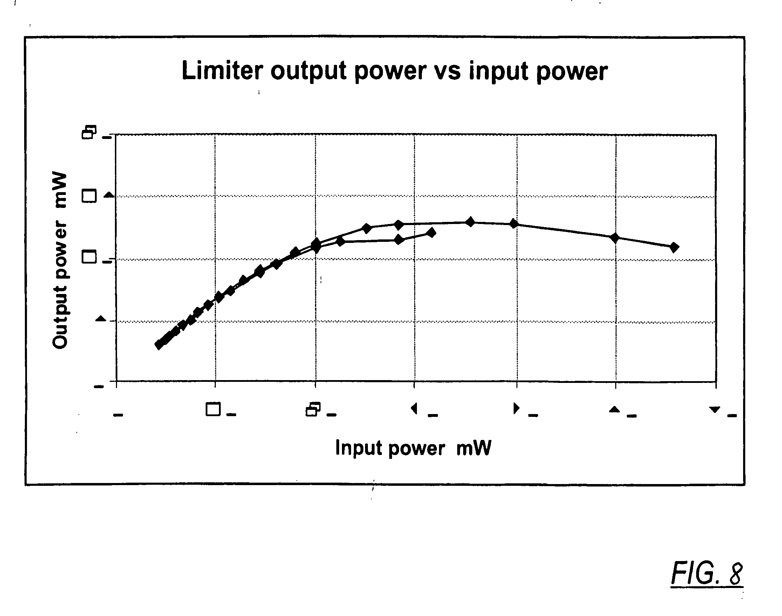

Fig. 8 shows a typical, experimental, power input-output curve of the power-limiting device. The device used was the embodiment of Figure 2. The optical-limiting solid mixture 10 in this case is comprised of a commercial epoxy resin (3M Scotch Weld DP100+) mixed with commercial carbon black powder (Alfa No. 39724). The average particle size of the particles is 0.042 micron. A 0.10-0.16% weight percent of carbon particles is mixed into part A of the resin, which is then mixed at 1:1 ratio to part B of the resin. This mixture is cured and assembled as in Fig.2.

This limiter turns permanently opaque when exposed to powers of 30±1 dBm, which is close to 20dB (two orders of magnitude) above the threshold power.

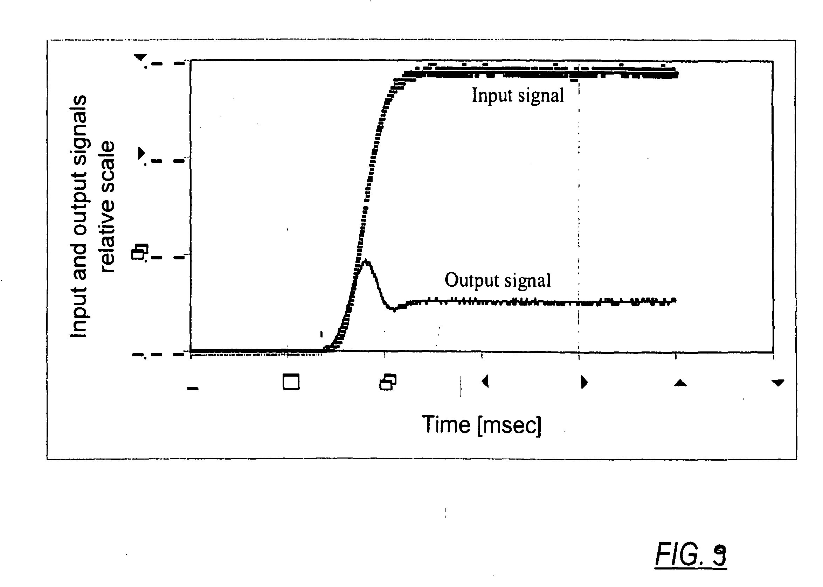

Fig. 9 is a time domain response curve of the optical power-limiting device described in Fig. 8, where the upper curve shows the power input to the device and the lower curve the power output from the device.

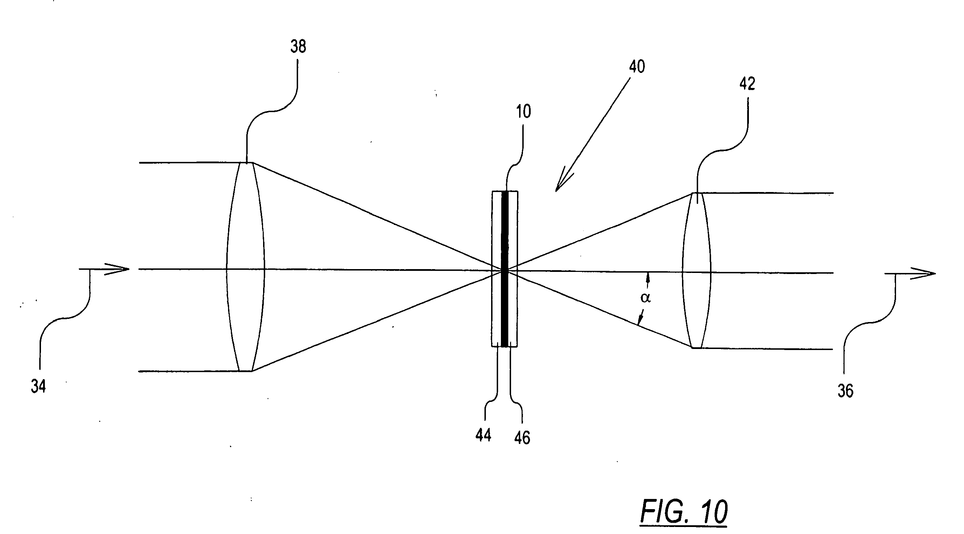

Fig. 10 illustrates a free space optical limiter not according to the invention in which light enters from the left side as a prime incident ray 34. The incident light is focused by a condensing lens 38 onto the optical-limiting solid mixture 10. Optional entrance and exit windows 44 and 46 are shown with the optical-limiting solid mixture 10 sandwiched in between. The optical-limiting solid mixture and its windows form an optical-limiting assembly 40. Scattered light at an angle greater than α is not collected by a collecting lens 42. The exit ray 36 represents the limited optical output.

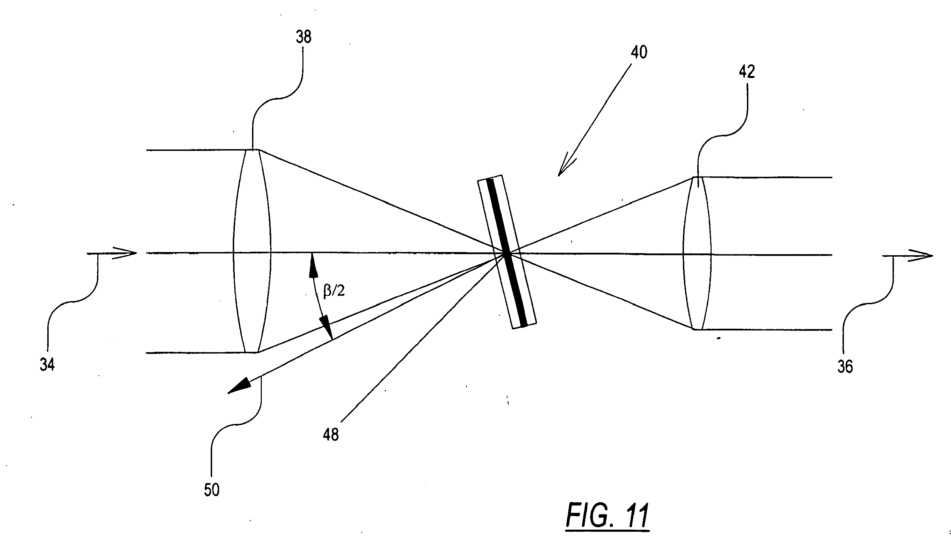

Fig. 11 is a variation of the optical limiter shown in Fig. 10 in which the optical-limiting assembly 40 is placed at an angle β/2 so that reflected light 50 from point 48 on the limiting assembly 40 does not re-enter the optical system.

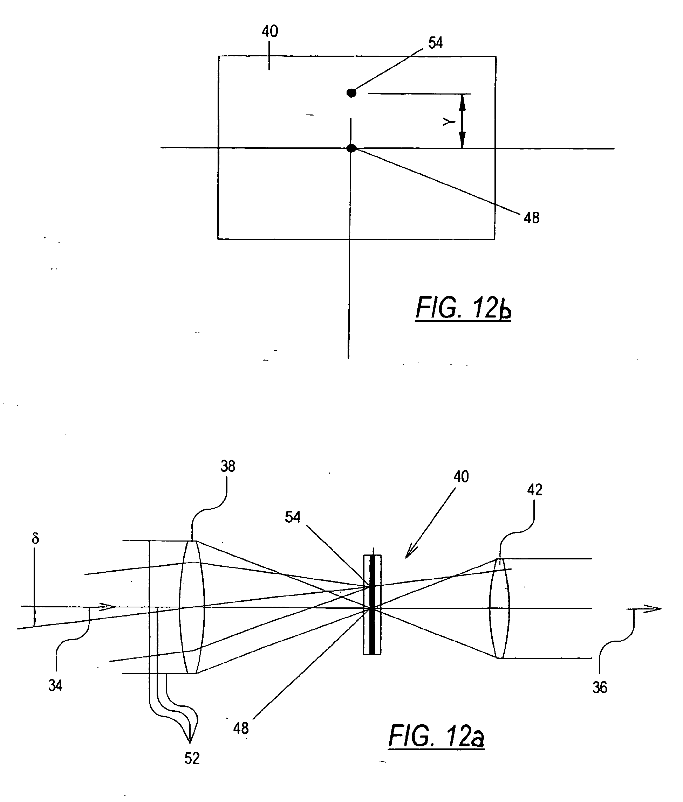

Figs. 12a and 12b illustrate the mechanism of protection via optical limiting of the embodiment of Figure 10. Assuming rays from infinity, such as prime ray 34, a real image is formed on the optical-limiting solid mixture 10. If a laser beam enters at angle δ, the light is focused on the optical-limiting solid mixture at point 54 which is offset from point 48 by a distance Y. The optical limiting occurs only at the point 54 with light scattering out of the optical system. The rest of the image is unimpaired.

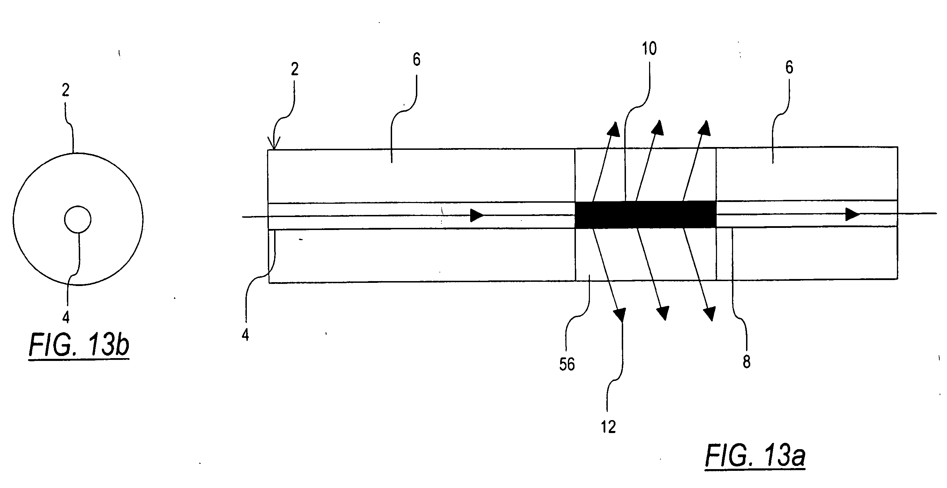

Figs. 13a and 13b illustrate yet another embodiment according to the invention in which the optical-limiting solid mixture 10 is used for the core material of a waveguide or optical fiber part 56. The light scattered at a large angle 12 is not propagated down the fiber. This embodiment has the advantage that the absorbed heat is distributed over a large volume, and that it has no insertion loss due to the gap between the fibers or waveguides.

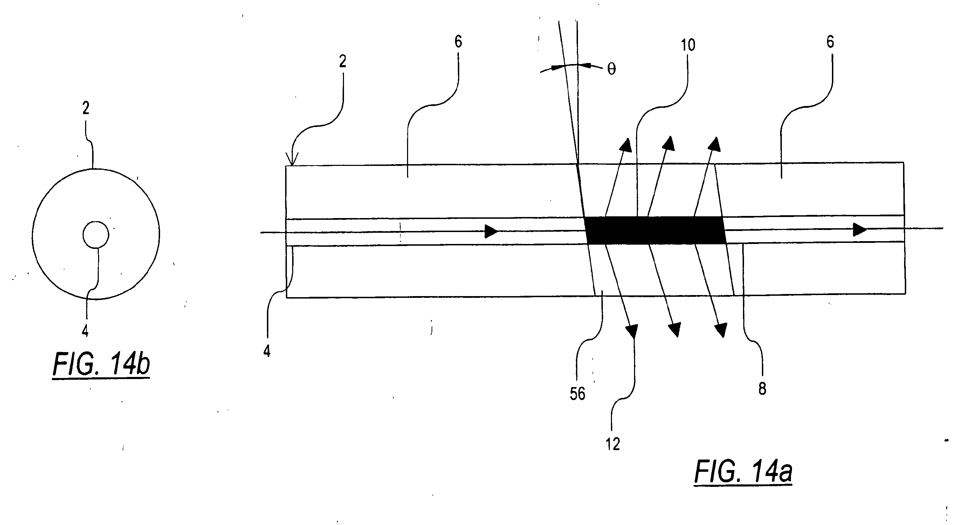

Figs. 14a and 14b illustrate the embodiment of Figs. 13a and 13b but with angled (at an angle θ) coupling and decoupling to the core of the optical-limiting solid mixture 10 to prevent back reflection.

It will be evident to those skilled in the art that the invention is not limited to the details of the foregoing illustrated embodiments and that the present invention may be embodied in other specific forms without departing from the essential attributes thereof. The present embodiments are therefore to be considered in all respects as illustrative and not restrictive, the scope of the invention being indicated by the appended claims rather than by the foregoing description, and all changes which come within the meaning of the claims are therefore intended to be embraced therein.

While particular embodiments and applications of the present invention have been illustrated and described, it is to be understood that the invention is not limited to the precise construction and compositions disclosed herein and that various modifications, changes, and variations may be apparent from the foregoing descriptions without departing from the scope of the invention as defined in the appended claims.

## Claims

1. An optical power limiter comprising:
an input optical transmission element (2),
an output optical transmission element (2'), and
a power-limiting element (10) disposed between said input and output elements for transmitting optical signals from said input element to said output element,
wherein said power-limiting element comprises an optically transparent solid optical polymer or inorganic glass matrix material having a refractive index that changes with temperature and containing dispersed light-absorbing solid nano-powder particles of at least one material that is reversibly heatable in response to light above a predetermined optical power level, the heating of said solid nano-powder particles in turn heating said matrix material to produce non-linear changes in the refractive index of said matrix material due to hot spots in the matrix material surrounded by a decreasing temperature gradient in their neighbourhood and thereby changing the optical transmission properties of said power-limiting element by scattering light of the optical signals, said particles being smaller than 0.1 micron and said particle material being at least one element selected from the group consisting of Ag, Au, Ni, V, Ti, Co, Cr, C, Re and Si,
**characterised in that** said input optical transmission element comprises an input optical fiber;
said output optical transmission element comprises an output optical fiber; and
said polymer or inorganic glass matrix material is directly adjoining opposed input and output optical surfaces of said optical fibers.

2. The optical power limiter of claim 1, wherein said optically transparent matrix material is selected from the group consisting of polymethylmethacrylate and its derivatives, epoxy resins, glass, sol-gel material and spin-on glass.

3. The optical limiter of claim 1, wherein said optical fibers are aligned using a V groove (28).

4. The optical limiter of claim 1, wherein said optical fibers are aligned using a ferrule with a hole.

5. The optical limiter of claim 1, wherein said opposed input and output optical surfaces angled to reduce back reflection.

6. The optical limiter of claim 1, including a spacer (30) between said opposed input and output optical surfaces to provide a preselected distance between said opposed input and output optical surfaces.

7. The optical limiter of claim 1, in which said solid mixture is the core material of a waveguide.

8. The optical power limiter of claim 1, wherein limiting said optical limiting solid mixture turns permanently opaque when exposed to predetermined powers above a threshold power.

9. An optical power-limiting method for limiting the optical power of optical signals transmitted from an input optical transmission element to an output optical transmission element, comprising:
placing a power-limiting element between said input and output elements, said power-limiting element comprising an optically transparent solid optical polymer or inorganic glass matrix material having a refractive index that changes with temperature and containing dispersed light-absorbing solid nano-powder particles of at least one element selected from the group consisting of Ag, Au, Ni, V, Ti, Co, Cr, C, Re and Si, said particles being smaller than 0.1 micron;
reversibly heating said nano-powder particles in response to light above a predetermined optical power level, the heating of said solid nano-powder particles in turn heating said matrix material to produce non-linear changes in the refractive index of said matrix material due to hot spots in the matrix material surrounded by a decreasing temperature gradient in their neighbourhood and thereby changing the optical transmission properties of said power-limiting element by scattering light of the optical signals,
wherein said input optical transmission element comprises an input optical fiber;
wherein said output optical transmission element comprises an output optical fiber; and
wherein said polymer or inorganic glass matrix material is directly adjoining opposed input and output optical surfaces of said optical fibers.

10. The optical power-limiting method of claim 9, wherein said optically transparent matrix material is at least one material selected from the group consisting of polymethylmethacrylate and its derivatives, based on epoxy resins, glass, sol gel derived and spin-on glass.

11. The optical power-limiting method of claim 9, wherein said optical fibers are aligned using a V groove.

12. The optical power-limiting method of claim 9, wherein said optical fibers are aligned using a ferrule with a hole.

13. The optical power-limiting method of claim 9, wherein said opposed input and output optical surfaces are angled to reduce back reflection.

14. The optical power-limiting method of claim 9, including a spacer between said opposed input and output optical surfaces to provide a preselected distance between said opposed input and output optical surfaces.

15. The optical power-limiting method of claim 9, in which said solid mixture is the core material of a waveguide.

16. The optical power-limiting method of claim 9, wherein said optical limiting solid mixture turns permanently opaque when exposed to predetermined powers above a threshold power.

## Patentansprüche

1. Optischer Leistungsbegrenzer, der umfasst:
ein optisches Eingangs-Durchlasselement (2),
ein optisches Ausgangs-Durchlasselement (2'), und
ein Leistungsbegrenzungselement (10), das zwischen dem Eingangs- und dem Ausgangselement angeordnet ist, um optische Signale von dem Eingangselement zu dem Ausgangselement durchzulassen,
wobei das Leistungsbegrenzungselement ein optisch durchlässiges festes optisches Polymer- oder anorganisches Glas-Matrixmaterial umfasst, das einen Brechungsindex hat, der sich mit der Temperatur ändert, und das dispergierte, lichtabsorbierende feste Nanopulver-Teilchen aus wenigstens einem Material beinhaltet, das in Reaktion auf Licht über einem vorgegebenen optische Leistungspegel reversibel erhitzt werden kann, wobei durch das Erhitzen der festen Nanopulver-Teilchen wiederum das Matrixmaterial erhitzt wird und nichtlineare Änderungen des Brechungsindex des Materixmaterials aufgrund von Wärmepunkten in dem Matrixmaterial erzeugt werden, die von einem abnehmenden Temperaturgradienten in ihrer Umgebung umschlossen sind, und so die optischen Durchlasseigenschaften des Leistungsbegrenzungselementes verändert werden, indem Licht der optischen Signale gestreut wird, wobei die Teilchen kleiner sind als 0,1 µm und das Teilchenmaterial wenigstens ein Element ist, das aus der Gruppe ausgewählt wird, die aus Ag, Au, Ni, V, Ti, Co, Cr, C, Re und Si besteht,
**dadurch gekennzeichnet, dass**
das optische Eingangs-Durchlasselement eine Eingangs-Lichtleitfaser umfasst;
das optische Ausgangs-Durchlasselement eine Ausgangs-Lichtleitfaser umfasst; und
das Polymer- oder anorganische Glas-Matrixmaterial direkt an einander gegenüberliegende optische Eingangs- und Ausgangsflächen der Lichtleitfasern angrenzt.

2. Optischer Leistungsbegrenzer nach Anspruch 1, wobei das optisch durchlässige Matrixmaterial aus der Gruppe ausgewählt wird, die aus Polymethylmethacrylat und seinen Derivaten, Epoxidharzen, Glas, Sol-Gel-Material und aufgeschleudertem Glas besteht.

3. Optischer Begrenzer nach Anspruch 1, wobei die Lichtleitfasern unter Verwendung einer V-Nut (28) ausgerichtet werden.

4. Optischer Begrenzer nach Anspruch 1, wobei die Lichtleitfasern unter Verwendung einer Verbindungsmuffe mit einem Loch ausgerichtet werden.

5. Optischer Begrenzer nach Anspruch 1, wobei die einander gegenüberliegenden optischen Eingangs- und Ausgangsflächen angewinkelt sind, um Rückstrahlung zu reduzieren.

6. Optischer Begrenzer nach Anspruch 1, der einen Abstandshalter (30) zwischen den einander gegenüberliegenden optischen Eingangs- und Ausgangsflächen enthält, um einen vorgewählten Abstand zwischen den einander gegenüberliegenden optischen Eingangs- und Ausgangsflächen zu schaffen.

7. Optischer Begrenzer nach Anspruch 1, wobei das feste Gemisch das Kernmaterial eines Wellenleiters ist.

8. Optischer Leistungsbegrenzer nach Anspruch 1, wobei das optische Begrenzungs-Feststoffgemisch permanent opak wird, wenn es vorgegebenen Leistungen über einer Schwellenleistung ausgesetzt wird.

9. Verfahren zum Begrenzen optischer Leistung, mit dem die optische Leistung optischer Signale begrenzt wird, die von einem optischen Eingangs-Durchlasselement zu einem optischen Ausgangs-Durchlasselement durchgelassen werden, wobei das Verfahren umfasst:
Positionieren eines Leistungsbegrenzungselementes zwischen dem Eingangs- und dem Ausgangselement, wobei das Leistungsbegrenzungselement ein optisch durchlässiges festes optisches Polymer- oder anorganisches Glas-Matrixmaterial umfasst, das einen Brechungsindex hat, der sich mit der Temperatur ändert, und das dispergierte lichtabsorbierende feste Nanopulver-Teilchen aus wenigstens einem Element beinhaltet, das aus der Gruppe ausgewählt wird, die aus Ag, Au, Ni, V, Ti, Co, Cr, C, Re und Si besteht, wobei die Teilchen kleiner sind als 1 µm;
reversibles Erhitzen der Nanopulver-Teilchen in Reaktion auf Licht über einem vorgegebenen optischen Leistungspegel, wobei durch das Erhitzen der festen Nanopulver-Teilchen wiederum das Matrixmaterial erhitzt wird und nichtlineare Änderungen des Brechungsindex des Materixmaterials aufgrund von Wärmepunkten in dem Matrixmaterial erzeugt werden, die von einem abnehmenden Temperaturgradienten in ihrer Umgebung umschlossen sind,
und so die optischen Durchlasseigenschaften des Leistungsbegrenzungselementes verändert werden, indem Licht der optischen Signale gestreut wird,
wobei das optische Eingangs-Durchlasselement eine Eingangs-Lichtleitfaser umfasst;
das optische Ausgangs-Durchlasselement eine Ausgangs-Lichtleitfaser umfasst; und
das Polymer- oder anorganische Glas-Matrixmaterial direkt an einander gegenüberliegende optische Eingangs- und Ausgangsflächen der Lichtleitfasern angrenzt.

10. Verfahren zum Begrenzen optischer Leistung nach Anspruch 9, wobei das optisch durchlässige Matrixmaterial wenigstens ein Material ist, das aus der Gruppe ausgewählt wird, die aus Polymethylmethacrylat und seinen Derivaten besteht, auf Epoxidharzen, Glas, Sol-Gel-Material und aufgeschleudertem Glas basiert.

11. Verfahren zum Begrenzen optischer Leistung nach Anspruch 9, wobei die Lichtleitfasern unter Verwendung einer V-Nut (28) ausgerichtet werden.

12. Verfahren zum Begrenzen optischer Leistung nach Anspruch 9, wobei die Lichtleitfasern unter Verwendung einer Verbindungsmuffe mit einem Loch ausgerichtet werden.

13. Verfahren zum Begrenzen optischer Leistung nach Anspruch 9, wobei die einander gegenüberliegenden optischen Eingangs- und Ausgangsflächen angewinkelt sind, um Rückstrahlung zu reduzieren.

14. Verfahren zum Begrenzen optischer Leistung nach Anspruch 9, der einen Abstandshalter (30) zwischen den einander gegenüberliegenden optischen Eingangs- und Ausgangsflächen enthält, um einen vorgewählten Abstand zwischen den einander gegenüberliegenden optischen Eingangs- und Ausgangsflächen zu schaffen.

15. Verfahren zum Begrenzen optischer Leistung nach Anspruch 9, wobei das feste Gemisch das Kernmaterial eines Wellenleiters ist.

16. Verfahren zum Begrenzen optischer Leistung nach Anspruch 9, nach Anspruch 1, wobei das optische Begrenzungs-Feststoffgemisch permanent opak wird, wenn es vorgegebenen Leistungen über einer Schwellenleistung ausgesetzt wird.

## Revendications

1. Limiteur de puissance optique comprenant :
un élément de transmission optique d'entrée (2),
un élément de transmission optique de sortie (2'), et
un élément de limitation de puissance (10) disposé entre lesdits éléments d'entrée et de sortie pour transmettre des signaux optiques dudit élément d'entrée au dit élément de sortie,
dans lequel ledit élément de limitation de puissance comprend un polymère optique solide optiquement transparent ou un matériau de matrice de verre inorganique ayant un indice de réfraction qui change avec la température et contenant des nanoparticules de poudres solides absorbant la lumière dispersée d'au moins un matériau qui est chauffable réversiblement en réponse au fait que la lumière se trouve au-dessus d'un niveau de puissance optique prédéterminé, le chauffage desdites nanoparticules de poudres solides provoquant le chauffage dudit matériau de matrice pour engendrer des changements non linéaires de l'indice de réfraction dudit matériau de matrice en raison de points chauds dans le matériau de matrice entouré d'un gradient de température décroissant dans leur voisinage, ce qui change les propriétés de transmission optique dudit élément de limitation de puissance en dispersant la lumière des signaux optiques, lesdites particules étant inférieures à 0,1 micron et ledit matériau de particules étant au moins un élément sélectionné dans le groupe se composant d'Ag, Au, Ni, V, Ti, Co, Cr, C, Re et Si,
**caractérisé en ce que**
ledit élément de transmission optique d'entrée comprend une fibre optique d'entrée ;
ledit élément de transmission optique de sortie comprend une fibre optique de sortie ; et
ledit polymère ou ledit matériau de matrice de verre inorganique est directement adjacent aux surfaces optiques d'entrée et de sortie opposées desdites fibres optiques.

2. Limiteur de puissance optique selon la revendication 1, dans lequel ledit matériau de matrice optiquement transparent est sélectionné dans le groupe se composant de méthacrylate de polyméthyle et de ses dérivés, de résines époxy, de verre, de matériau sol-gel et de verre filé.

3. Limiteur optique selon la revendication 1, dans lequel lesdites fibres optiques sont alignées en utilisant une rainure en V (28).

4. Limiteur optique selon la revendication 1, dans lequel lesdites fibres optiques sont alignées en utilisant une férule avec un trou.

5. Limiteur optique selon la revendication 1, dans lequel lesdites surfaces optiques d'entrée et de sortie opposées sont inclinées pour réduire la rétroréflexion.

6. Limiteur optique selon la revendication 1, comprenant une entretoise (30) entre lesdites surfaces optiques d'entrée et de sortie opposées pour fournir une distance présélectionnée entre lesdites surfaces optiques d'entrée et de sortie opposées.

7. Limiteur optique selon la revendication 1, dans lequel ledit mélange solide est le matériau de coeur d'un guide d'onde.

8. Limiteur de puissance optique selon la revendication 1, dans lequel ledit mélange solide de limitation optique devient définitivement opaque lors de son exposition à des puissances prédéterminées au-dessus d'un seuil de puissance.

9. Procédé de limitation de puissance optique pour limiter la puissance optique de signaux optiques transmis d'un élément de transmission optique d'entrée à un élément de transmission optique de sortie, comprenant :
le placement d'un élément de limitation de puissance entre lesdits éléments d'entrée et de sortie, ledit élément de limitation de puissance comprenant un polymère optique solide optiquement transparent ou un matériau de matrice de verre inorganique ayant un indice de réfraction qui change avec la température et contenant des nanoparticules de poudres solides absorbant la lumière dispersée d'au moins un élément sélectionné dans le groupe se composant d'Ag, Au, Ni, V, Ti, Co, Cr, C, Re et Si, lesdites particules étant inférieures à 0,1 micron ;
le chauffage réversible desdites nanoparticules de poudres en réponse au fait que la lumière se trouve au-dessus d'un niveau de puissance optique prédéterminé, le chauffage desdites nanoparticules de poudres solides provoquant le chauffage dudit matériau de matrice pour engendrer des changements non linéaires de l'indice de réfraction dudit matériau de matrice en raison de points chauds dans le matériau de matrice entouré d'un gradient de température décroissant dans leur voisinage, ce qui change les propriétés de transmission optique dudit élément de limitation de puissance en dispersant la lumière des signaux optiques,
dans lequel ledit élément de transmission optique d'entrée comprend une fibre optique d'entrée ;
dans lequel ledit élément de transmission optique de sortie comprend une fibre optique de sortie ; et
dans lequel ledit polymère ou ledit matériau de matrice de verre inorganique est directement adjacent aux surfaces optiques d'entrée et de sortie opposées desdites fibres optiques.

10. Procédé de limitation de puissance optique selon la revendication 9, dans lequel ledit matériau de matrice optiquement transparent est au moins un matériau sélectionné dans le groupe se composant de méthacrylate de polyméthyle et de ses dérivés, sur la base de résines époxy, de verre, de verre dérivé sol-gel et de verre filé.

11. Procédé de limitation de puissance optique selon la revendication 9, dans lequel lesdites fibres optiques sont alignées en utilisant une rainure en V.

12. Procédé de limitation de puissance optique selon la revendication 9, dans lequel lesdites fibres optiques sont alignées en utilisant une férule avec un trou.

13. Procédé de limitation de puissance optique selon la revendication 9, dans lequel lesdites surfaces optiques d'entrée et de sortie opposées sont inclinées pour réduire la rétroréflexion.

14. Procédé de limitation de puissance optique selon la revendication 9, comprenant une entretoise entre lesdites surfaces optiques d'entrée et de sortie opposées pour fournir une distance présélectionnée entre lesdites surfaces optiques d'entrée et de sortie opposées.

15. Procédé de limitation de puissance optique selon la revendication 9, dans lequel ledit mélange solide est le matériau de coeur d'un guide d'onde.

16. Procédé de limitation de puissance optique selon la revendication 9, dans lequel ledit mélange solide de limitation optique devient définitivement opaque lors de son exposition à des puissances prédéterminées au-dessus d'un seuil de puissance.
